# EUROPÄISCHE PATENTSCHRIFT

(11) **EP 2 986 032 B1**
(45) Veröffentlichungstag und Bekanntmachung des Hinweises auf die Patenterteilung: **11.10.2017**
(21) Anmeldenummer: 15179761.0
(22) Anmeldetag: 05.08.2015
(51) Int. Cl.: H04R 25/00

(54) **VORRICHTUNG UND VERFAHREN ZUR INTEGRATION VON HÖRGERÄTEKOMPONENTEN**
DEVICE AND METHOD FOR INTEGRATION OF HEARING AID COMPONENTS
DISPOSITIF ET PROCEDE D'INTEGRATION DE COMPOSANTS D'APPAREIL AUDITIF

(30) Priorität: 13.08.2014 DE 102014216086
(43) Veröffentlichungstag der Anmeldung: 17.02.2016
(73) Patentinhaber: Sivantos Pte. Ltd., Singapore 139959 (SG)
(72) Erfinder: NÄTHER, Thomas, 32657 Lemgo (DE)
(74) Vertreter: FDST Patentanwälte

(56) Entgegenhaltungen:
- EP-A1- 2 301 741
- EP-A2- 1 681 903
- EP-A2- 1 768 450
- WO-A1-2013/091724
- WO-A2-01/05207
- DE-B3-102006 008 044
- US-A1- 2011 051 965
- KRUTH ET AL: "Progress in Additive Manufacturing and Rapid Prototyping", CIRP ANNALS, ELSEVIER BV, NL, CH, FR, Bd. 47, Nr. 2, 1. Januar 1998 (1998-01-01) , Seiten 525-540, XP022146131, ISSN: 0007-8506, DOI: 10.1016/S0007-8506(07)63240-5

## Beschreibung

Die Erfindung betrifft ein Verfahren zur Herstellung eines Elements für ein Hörhilfegerät, wobei das Element einen Körper und eine Komponente aufweist, die in einer vorbestimmten Relativposition zueinander angeordnet werden sollen, sowie eine entsprechende Komponente.

Hörhilfegeräte sind tragbare Hörvorrichtungen, die zur Versorgung von Schwerhörenden dienen. Um den zahlreichen individuellen Bedürfnissen entgegenzukommen, werden unterschiedliche Bauformen von Hörhilfegeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

Hörhilfegeräte besitzen prinzipiell als wesentliche Komponenten einen Eingangswandler, einen Verstärker und einen Ausgangswandler. Der Eingangswandler ist in der Regel ein akusto-elektrischer Wandler, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinrichtung integriert. Die Energieversorgung erfolgt üblicherweise durch eine Batterie oder einen aufladbaren Akkumulator.

Einzelne Teile des Hörgeräts sind in bestimmten Positionen zueinander zu fixieren, um eine ordnungsgemäße Funktion zu gewährleisten. Dies gilt beispielsweise für einzelne Mikrofone, die zu einem Richtmikrofon zusammengefasst werden und die daher genau definierte Abstände haben müssen.

Es gibt auch spezielle Hörhilfegeräte, die als System aus zwei Hörhilfegeräten zur Versorgung beider Ohren einer Person gedacht sind. Diese werden als binaurale Hörhilfegeräte bezeichnet. Sie unterscheiden sich von einem Paar konventioneller Hörhilfegeräte dadurch, dass zwischen den beiden Hörhilfegeräten eine Kommunikationsverbindung, vorzugsweise drahtlos besteht, um Einstellungen synchron vornehmen zu können und auch Audiosignale für eine stereoskopische Verarbeitung austauschen zu können. Da für die Kommunikation nur sehr geringe elektrische Leistungen zur Verfügung stehen, müssen die Antennen sehr empfindlich sein und auch präzise beim Tragen am Kopf aufeinander ausgerichtet sein.

Um die Position der Antennen innerhalb der Ohrschalen (Otoplastik) genau festzulegen, wird üblicherweise in eine fertige Ohrschale ein Befestigungselement, zum Beispiel ein Ring, durch Kleben eingebracht, in dem dann wiederum eine Antennenspule angeordnet wird.

Es ist allerdings schwierig, die Positionierung des Rings in der Ohrschale präzise vorzunehmen. Darüber hinaus ist in der Ohrschale der Platz knapp bemessen, sodass es Probleme bereitet, den Platz für die Antenne und das zusätzliche Befestigungselement im Inneren der Otoplastik bereitzustellen, insbesondere wenn es sich um eine Schale eines in-dem-Ohr-Hörgerätes (IdO bzw. CiC) handelt.

Aus der Druckschrift US 5487012 ist es weiterhin bekannt, eine Otoplastik aus mehrteiligen Rohlingen durch Fräsen oder andere abtragende Verfahren herzustellen. In den Rohlingen sind bereits Vertiefungen vorgesehen, die durch Verbinden, z.B. Verkleben der mehreren Teile Kammern für Komponenten wie Antennen oder Hörer bereitstellen.

Aus der DE 10 2005 046 169 A1 ist ein Verfahren zum Herstellen eines Hörhilfegerätes zu entnehmen, bei dem eine Gehäuseschale mit Befestigungselementen für eine Antenne mittels des Rapid-Prototyping-Verfahrens hergestellt wird. Die Antenne wird bei der Montage dann zusammen mit einem Höhrer in die Gehäuseschale eingesetzt. Aufgrund der geringen Baugröße ist die Montage der Antenne jedoch schwierig. Es muss bereits bei der Anordnung der Aufnahme für die Antenne daher bereits auch auf die Montierbarkeit geachtet werden, was häufig zu einer nicht optimalen Positionierung der Antenne führt.

Weitere Verfahren zum Herstellen eines Hörhilfegerätes, bei denen eine Gehäuseschale mittels eines Rapid-Prototyping-Verfahrens hergestellt wird, sind in der US 2011/0051965 A1 und der EP 2 301 741 A1 beschrieben. Dabei wird im Falle der EP 2 301 741 A1 ein Verfahren dargelegt, bei dem ein vorgefertigter Rahmen in einem Rapid-Prototyping-Gerät positioniert wird und bei dem nachfolgend eine Gehäuseschale um den Rahmen herum gefertigt wird. Aus der US 2011/0051965 A1 ist dagegen ein Verfahren zu entnehmen, bei dem mittels eines Rapid-Prototyping-Verfahrens eine Gehäuseschale hergestellt ist, welche leitende und nicht-leitende Schichten aufweist, wobei sowohl die leitenden als auch die nicht-leitenden Schichten durch das Rapid-Prototyping-Verfahren hergestellt werden, also zum Beispiel gedruckt werden.

Aufgabe der vorliegenden Erfindung ist es, ein verbessertes Verfahren zur Herstellung von Elementen eines Hörhilfegeräts, beispielsweise einer Ohrschale bereitzustellen, das möglichst einfach auszuführen ist und eine größtmögliche Flexibilität bezüglich der Form des Elements und der Position der darin anzuordnenden Komponente, beispielsweise einer Antenne bietet.

Erfindungsgemäß wird diese Aufgabe gelöst durch ein Verfahren nach Anspruch 1. Das erfindungsgemäße Verfahren betrifft ein Verfahren zur Herstellung eines Elements für ein Hörhilfegerät. Das Element weist einen Körper und eine Komponente auf. Das erfindungsgemäße Verfahren weist die Schritte auf, eine Relativposition der Komponente an dem Element vorzubestimmen, sowie eine Form und Lage einer Aufnahme für die Komponente in der vorbestimmten Relativposition als integraler Bestandteil des Körpers. Das Verfahren weist darüber hinaus das Herstellen eines Teils des Elements mittels eines additiven Herstellungsverfahrens auf, wobei der Teil des Elements einen Teil des Körpers und einen Teil der Aufnahme aufweist, sodass die Komponente in der vorbestimmten Relativposition in dem Teil der Aufnahme positioniert werden kann. Teil ist hier in dem Sinne zu verstehen, dass der Körper und die Aufnahme und damit auch das Element nur teilweise fertiggestellt sind. In einem weiteren Schritt des Verfahrens wird die Komponente in dem Teil der Aufnahme angeordnet. Schließlich werden in einem Schritt des Verfahrens der Körper und/oder die Aufnahme mittels des additiven Herstellungsverfahrens fertiggestellt.

Auf vorteilhafte Weise ermöglicht es das erfindungsgemäße Verfahren, ein Element für ein Hörhilfegerät, beispielsweise eine Ohrschale mittels eines additiven Verfahrens, zum Beispiel 3D-Druck individuell zu gestalten. Indem eine Aufnahme für die Komponente als Teil des Körpers des Elements geplant wird, kann diese mit der Herstellung des Körpers in einem Schritt integral bereitgestellt werden. Gleichzeitig wird dadurch der vorhandene Raum optimal genutzt und die Relativposition von Komponente und Element präzise eingestellt. Handelt es sich bei dem Element um eine Ohrschale und bei der Komponente um eine Antenne, so wird dadurch auch die Ausrichtung zweier Antennen in Hörhilfegeräten eines binauralen Hörhilfesystems beim ordnungsgemäßen Tragen am Kopf genau festgelegt. Indem zunächst ein Teil des Elements und der Aufnahme bereitgestellt, die Komponente eingelegt und danach das Element und/oder die Aufnahme fertiggestellt wird, ist die Komponente in der Aufnahme fixiert. Es sind vorteilhafter Weise keine weiteren Fertigungsschritte und platzraubenden Hilfskonstruktionen zur Positionierung der Komponente in dem Element mehr erforderlich.

Von wesentlicher Bedeutung ist hierbei, dass zunächst in einem ersten Schritt mit dem additiven Herstellverfahren ein Teil der Aufnahme für die Komponente erzeugt wird, wobei der Teil der Aufnahme bereits zur Positionierung und zumindest Vorab-Fixierung geeignet ist. Der Teil der Aufnahme und der teilweise fertiggestellte Körper, insbesondere eine Gehäuseschale des Hörhilfegeräts sind - infolge des additiven Herstellverfahrens als ein integrales, einstückiges Teil aus dem gleichen Material ausgebildet. Im nächsten Schritt wird dann die Komponente in der Aufnahme platziert. Da der Körper nur teilweise gefertigt ist, ist eine einfache Zugänglichkeit und damit eine einfach Platzierung der Komponente ermöglicht. Schließlich wird anschließend in einem dritten Schritt das additive Verfahren weitergeführt und der Körper und mit ihm die Aufnahme fertiggestellt. Das Verfahren betrifft ein Element für ein Hörhilfegerät, wobei das Element einen Körper, eine Komponente und eine mit dem Körper einstückig gefertigte Aufnahme für die Komponente aufweist. Die Aufnahme umgibt die Komponente in drei unterschiedlichen Raumrichtungen zumindest teilweise derart, dass die Komponente in ihrer Relativposition zu dem Element gegen Bewegungen in den drei Raumrichtungen fixiert ist. Die Komponente ist durch die Aufnahme insgesamt vorzugseise positionsfest und spielfrei fixiert.

Auf vorteilhafte Weise ist die Aufnahme einstückig mit dem Element gefertigt, was einen geringen Material- und Platzbedarf ermöglicht und eine gute Verbindung zwischen Aufnahme und dem Körper des Elements sicherstellt. Indem die Aufnahme die Komponente in drei unterschiedliche Raumrichtungen, z.B. eine x-, y- und z-Achse, umgibt, ist die Komponente in dem Element gegen Verrutschen gesichert, sodass sie auch bei Vibrationen auf vorteilhafte Weise ihre Position in der Komponente nicht verlässt.
Weitere vorteilhafte Fortbildungen der Erfindung sind in den abhängigen Ansprüchen angegeben.
In einer denkbaren Ausführungsform des erfindungsgemäßen Verfahrens verbleibt der Teil des Elements bei dem Schritt des Positionierens der Komponente in der Aufnahme des Elements in einer Vorrichtung zum Ausführen des additiven Herstellungsverfahrens. Gegenüber einer Positionierung nach einer Fertigstellung des Körpers entfallen Arbeitsschritte und das Element kann nach der Positionierung der Komponente ohne neue Justierung der Herstellungseinrichtung präzise fertiggestellt werden.

In einer denkbaren Ausführungsform des erfindungsgemäßen Verfahrens umfasst der Schritt des Positionierens der Komponente in der Aufnahme weiterhin das Abtragen von Material in der Aufnahme.

So können vorteilhafter Weise Artefakte des Herstellungsverfahrens wie Grate beseitigt und ein optimaler Sitz der Komponente sichergestellt werden.

Es ist in dem erfindungsgemäßen Verfahren auch möglich dass bei den Schritten des Herstellens eines Teils des Körpers und der Aufnahme und/oder der Fertigstellung der Körper und/oder der Aufnahme mittels des additiven Herstellungsverfahrens eine Zuführung in der Aufnahme freigelassen wird. So können elektrische Zu- oder Ableitungen zu der Komponente Geführt oder auch Zu- oder Abgänge für Schall als integraler Bestandteile des Körpers und/oder der Aufnahme bereitgestellt werden.

In einer möglichen Ausführungsform des erfindungsgemäßen Verfahrens ist das additive Herstellverfahren ein Verfahren für dreidimensionalen Druck.

So ist es möglich, für das Verfahren kostengünstige und leicht verfügbare Geräte zu verwenden, Herstellungskosten zu minimieren und individuell unterschiedliche Elemente bereitzustellen.

In einer möglichen Ausführungsform des erfindungsgemäßen Verfahrens weist das additive Herstellverfahren einen Schritt aus Auftragen von geschmolzenem Material, Sintern oder Fotopolymerisation auf.

So ist es möglich, je nach mechanischen und chemischen Anforderungen an das Element optimal geeignete Materialien zu verwenden wie unterschiedliche Kunststoffe, Metalle oder Keramiken.

In einer Ausführungsform des erfindungsgemäßen Elements sind der Körper und die Aufnahme einstückig mittels eines additiven Herstellungsverfahrens gefertigt.

Eine einstückige Ausführung von Körper und Aufnahme stellt maximale Festigkeit bei minimalem Material- und Fertigungsaufwand bereit.

In einer denkbaren Ausführungsform der Erfindung ist das Element eine Schale für ein Hörhilfegerät.

Auf vorteilhafte Weise ist das Element eine Schale für ein Hörhilfegerät, wodurch die hohen Anforderungen an individuelle Passform und geringen Platzbedarf optimal erfüllt werden.

Es ist in einer Ausführungsform des erfindungsgemäßen Elements möglich, dass die Aufnahme nur in einer Raumrichtung durch den Körper begrenzt wird. In anderen Worten, in nur einer Raumrichtung wird eine Seitenwand bzw. Begrenzung der Aufnahme, durch die die Komponente in Position gehalten wird, von dem Körper selbst ausgebildet, während in den anderen Raumrichtungen Strukturen die Aufnahme begrenzen, die nicht durch eine äußere Form des Elements vorgegeben sind, sondern allein durch die für die Aufnahme vorgegebene Position der Komponente relativ zu dem Element.

So ist es vorteilhafter Weise möglich, beispielsweise eine in dem Element freistehende Aufnahme vorzusehen, die eine beliebige Ausrichtung der Komponente erlaubt und nicht bereits durch die äußeren Konturen des Elements mitbestimmt ist, beispielsweise indem die Aufnahme durch eine Aussparung in einer Wand des Körpers ausgebildet ist. Lediglich an mindestens einer Seite ist es erforderlich, dass die Aufnahme mit dem Körper verbunden ist, um die Ausrichtung und Position der Aufnahme und der Komponente in Bezug auf den Körper festzulegen.

Vorzugsweise umschließt die Aufnahme die Komponente vollständig bis auf eine evtl. Durchführung für eine ggf. erforderliche elektrische Zuleitung für die Komponente. Die Aufnahme ist daher durch massive Wandungen in allen Raumrichtungen begrenzt. Die Komponente ist daher quasi in dem Material der Wandung der Aufnahme eingebettet, vergleichbar mit einem vergossenen Element.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
- Fig. 1: eine beispielhafte schematische Darstellung eines erfindungsgemäßen Hörhilfegeräts;
- Fig. 2: einen Teilquerschnitt durch ein beispielhaftes Element eines erfindungsgemäßen Hörhilfegeräts;
- Fig. 3: einen Teilquerschnitt durch ein beispielhaftes Element eines erfindungsgemäßen Hörhilfegeräts;
- Fig. 4: ein schematisches Ablaufdiagramm eines erfindungsgemäßen Verfahrens.

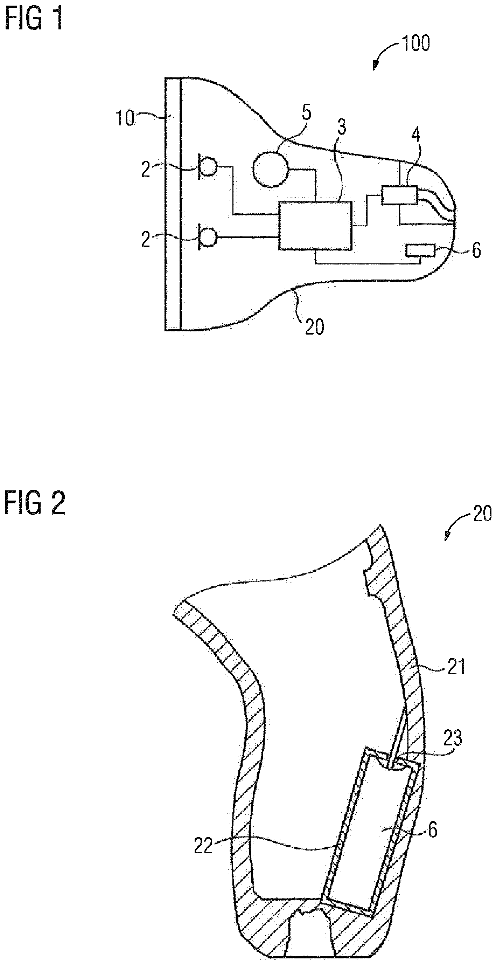

Fig. 1 zeigt den prinzipiellen Aufbau eines erfindungsgemäßen Hörhilfegeräts 100. In ein Hörhilfegerätegehäuse 1 sind ein oder mehrere Mikrofone, auch als akusto-elektrische Wandler 2 bezeichnet, zur Aufnahme des Schalls bzw. akustischer Signale aus der Umgebung eingebaut. Die Anordnung der Mikrofone 2 und der anderen Elemente des Hörhilfegerätes 100 ist rein schematisch dargestellt und gibt nicht die räumliche Anordnung in dem erfindungsgemäßen Hörhilfegerät 100 wieder. Bei dem Hörhilfegerät kann es sich prinzipiell um ein Hinter-dem-Ohr (HdO) oder In-dem-Ohr (IdO) handeln, wobei das IdO wegen des beschränkten Platzes im Gehörgang und dessen individuellen Form insbesondere für das erfindungsgemäße Verfahren geeignet ist. Die Mikrofone 2 sind akusto-elektrische Wandler 2 zur Umwandlung des Schalls in erste elektrische Audiosignale. Eine Signalverarbeitungseinrichtung 3, die ebenfalls in das Hörhilfegerätegehäuse 1 angeordnet ist, verarbeitet die ersten Audiosignale. Das Ausgangssignal der Signalverarbeitungseinrichtung 3 wird an einen Lautsprecher bzw. Hörer 4 übertragen, der ein akustisches Signal ausgibt. Bei einem HdO-Hörhilfegerät wird der Schall gegebenenfalls über einen Schallschlauch, der mit einer Otoplastik im Gehörgang fixiert ist, zum Trommelfell des Geräteträgers übertragen. Es ist aber auch ein anderer elektro-mechanischer Wandler denkbar, wie beispielweise ein Knochenleitungshörer. Die Energieversorgung des Hörgeräts und insbesondere die der Signalverarbeitungseinrichtung 3 erfolgt durch eine ebenfalls in das Hörgerätegehäuse 1 integrierte Batterie 5.

Das Hörhilfegerät 100 weist weiterhin eine Komponente 6 auf, die eine Übertragungseinrichtung zur Übertragung von Informationen zu einem zweiten Hörhilfegerät ist. Um eine optimale Übertragung bereitzustellen, ist dabei eine exakte Ausrichtung der Übertragungseinrichtung 6 auf eine korrespondierende Übertragungseinrichtung 6 des anderen Hörhilfegeräts erforderlich.

Das Hörhilfegerät 100 weist ein Gehäuse auf, dass von einem Schale bzw. Element 20 und einer Abdeckung 10 gebildet wird.

In Fig. 2 ist ein Teilquerschnittdurch das Element 20 dargestellt, wobei das Element 20 in der beispielhaften Darstellung der Fig. 2 eine Schale eines IdO-Hörgeräts ist.

Das Element 20 weist einen Körper 21 auf, der für eine Schale eines IdO-Hörhilfegeräts 100 dem Gehörgang des Trägers individuell nachgeformt ist. In dem Element 20 ist eine Komponente 6, in dem dargestellten Beispiel die Übertragungseinrichtung, angeordnet. Um die Komponente 6 an der vorbestimmten Position zu fixieren, ist diese von einer Aufnahme 22 umgeben, die einstückig mit dem Körper 21 gefertigt ist. In dem Beispiel der Fig. 2 ist dabei der Boden und die rechte Seitenwand der Aufnahme 22 gleichzeitig Teil des Körpers 21. Die Komponente 6 ist dabei von allen Seiten, d.h. in drei unterschiedliche Raumrichtungen bzw. Koordinaten von der Aufnahme 22 umgeben, sodass in allen drei Koordinaten in ihrer Position und Ausrichtung gesichert ist und sich auch bei Erschütterungen die Lage relativ zu dem Körper 21 nicht verändert. Indem im Beispiel der Fig.2 eine seitliche Begrenzung der Aufnahme 22 Teil der Wand des Körpers 21 ist, kann durch Einsparen einer Wand der Platz im Inneren des Körpers 21 optimal genutzt werden.
An einer Stelle weist die Aufnahme 22 eine Durchführung 23 auf, an der beispielsweise eine elektrische Zuleitung durchgeführt ist, wenn es sich bei der Komponente 6 um eine Übertragungseinrichtung handelt.

Charakteristisch für das Element 20 ist es dabei, das die Aufnahme 22 und der Körper 21 nicht durch Verbinden zweier oder mehrerer Teilelemente, z.B. durch Kleben, gebildet wird, sondern einstückig hergestellt wird.
Anhand charakteristischer Merkmale wie Material und Oberflächenbeschaffenheit, insbesondere der inneren Oberflächen des Körpers 21 lässt sich dabei erkennen, ob der Körper 21 mit der Aufnahme 22 in einem additiven Herstellungsverfahren erzeugt wurde, beispielsweise durch polygonale, quaderförmige oder schichtartige Strukturen, die durch einzelne Volumenelemente eines 3-D-Druckers verursacht werden.

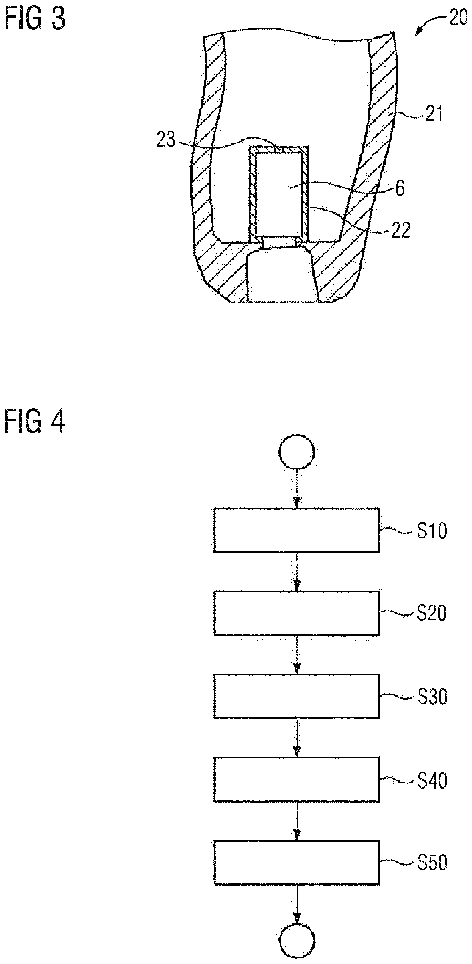

In Fig. 3 ist ein Teilquerschnitt durch ein weiteres beispielhaftes Element 20 gemäß der Erfindung dargestellt. Gleiche Gegenstände sind mit den gleichen Referenzzeichen wie in Fig. 2 bezeichnet.
Das Element 20 der Fig. 3 unterscheidet sich von dem Element 20 der Fig. 2 im Wesentlichen dadurch, dass die Aufnahme 22 lediglich am in der Figur unteren Rand mit dem Körper 21 in Verbindung steht. Die seitlichen und oberen Begrenzungen der Aufnahme 22 sind frei im Raum und nicht in unmittelbarer Verbindung mit dem Körper 21, sodass auch die Ausrichtung der Aufnahme 22 relativ zu dem Körper 21 frei in den Grenzen des im Inneren des Körpers 21 zur Verfügung stehenden Raums gewählt werden kann.
Fig. 4 zeigt ein schematisches Ablaufdiagramm eines erfindungsgemäßen Verfahrens zur Herstellung eines Elements 20 für ein Hörhilfegerät, wobei das Element 20 einen Körper 21 und eine Komponente 6 aufweist. In einem Schritt S10 wird eine Relativposition der Komponente 6 an dem Element 20 vorbestimmt. Wenn es sich beispielsweise bei dem Element 20 um eine Schale eines IdO-Hörgerätes handelt, so werden zunächst die Gehörgänge des Trägers individuell erfasst. Dazu kann der Gehörgang durch einen Abdruck abgebildet oder mittels 3-dimensionalen Scannens erfasst werden. Weiterhin muss die relative Lage der beiden Gehörgänge zueinander erfasst werden, sei es mit mechanischen optischen oder bildgebenden Verfahren. Wenn dann die Komponente 6 beispielsweise eine Übertragungseinrichtung ist, so kann anhand der gewonnen Daten die Position und Ausrichtung der Komponente 6 in dem Körper des Elements 20 so vorbestimmt werden, dass eine Achse einer maximalen Empfangsempfindlichkeit der Übertragungseinrichtung auf die jeweilige andere Übertragungseinrichtung im anderen Ohr ausgerichtet ist. Bei einer Antennenspule ist das beispielsweise eine Achse senkrecht zum Querschnitt der Spule.

In einem Schritt S20 wird eine Form und Lage der Aufnahme 22 für die Komponente 6 in der vorbestimmten Relativposition als integraler Bestandteil des Körpers 21 vorbestimmt. Es ist zum Beispiel denkbar, als Aufnahme 22 eine Form zu wählen, die die bekannte Komponente 6 äußerlich mit einer bestimmten Dicke eines Materials des Körpers 21 in der vorbestimmten Lage und Ausrichtung umgibt. Ist die Antennenspule beispielsweise zylinderförmig, so kann es sich bei der Aufnahme 22 auch um einen Hohlzylinder handeln, dessen Innendurchmesser gerade dem Außendurchmesser der Antennenspule entspricht. Es ist aber auch denkbar, dass die Komponente 6 von der Aufnahme nicht vollständig umhüllt wird, sondern in einigen Bereichen die Komponente zugänglich bleibt. So kann die Form der Aufnahme auch eine Art Käfig bilden, der die Komponente 6 in allen drei Raumrichtungen derart umgibt, dass die Komponente 6 dennoch in der vorbestimmten Lage relativ zu dem Körper gehalten werden kann.

In einem Schritt S30 wird ein Teil des Körpers und der Aufnahme mittels eines additiven Herstellungsverfahrens hergestellt. Anhand der vorbestimmten Form und Lage kann mit Hilfe des additiven Herstellungsverfahrens, zum Beispiel mittels eines 3D-Druckers, der Körper der Fig. 2 oder 3 von unten her auf einer Auflage Schicht für Schicht aufgebaut werden. Dabei entsteht zunächst der untere Teil des Körpers mit der Öffnung zum Trommelfell hin. Anschließend werden auf diesen Boden die äußeren Wände des Körpers 21, die am Gehörgang anliegen, aufgebaut. Gleichzeitig werden im Inneren des Körpers 21 seitliche Begrenzungen der Aufnahme 22 aufgebaut. Der Vorgang des schichtweisen Aufbauens wird unterbrochen, bevor die Aufnahme 22 nach oben hin durch eine Struktur abgeschlossen ist, sodass zunächst noch die Komponente 6 in die Aufnahme 22 eingeführt werden kann.

Der Zeitpunkt, zu dem der Schritt S30 stattfindet, hängt von der Form der Komponente 6, der Ausrichtung der Aufnahme 22 relativ zu dem Körper 21 und vom verwendeten Herstellungsverfahren ab. Bei einem 3D-Drucker, der horizontale Schichten von oben aufträgt, kann die Komponente 6 erst dann in die Aufnahme eingeführt werden, wenn alle Bereiche der Aufnahme mit Hinterschneidungen bezüglich der Komponente 6 ausgeführt sind, also Bereiche, die aus Sicht eines Druckkopfes von oben hinter der Komponente 6 verborgen sind.

Jetzt ist es in einem Schritt S40 möglich, die Komponente in der vorbestimmten Relativposition in dem Teil der Aufnahme zu positionieren. Es ist aber auch denkbar, dass in diesem Schritt S40 Material der Aufnahme abgetragen wird, beispielsweise Grate aus dem additiven Herstellungsverfahren.

Vorzugsweise verbleibt das Element 20 während des Schritts S40 in der Vorrichtung zum Ausführen des additiven Herstellungsverfahrens, sodass keine Re-Positionierung nach einer Entnahme und Einsetzen erforderlich ist. Dadurch wird der Herstellungsprozess beschleunigt und die Genauigkeit erhöht.

Nachdem sich die Komponente 6 in der vorbestimmten Lage in der Aufnahme 22 befindet, kann der Herstellungsprozess fortgesetzt werden. In einem Schritt S50 wird der Körper 21 und/oder die Aufnahme 22 mittels des additiven Herstellungsverfahrens fertiggestellt. Dabei ist es je nach Form des Elements 20 denkbar, dass nur noch die Aufnahme 22 oder auch der Körper 21 noch fertiggestellt werden muss.

Handelt es sich bei der Komponente 6 um eine Komponente, die beispielsweise elektrische Anschlüsse aufweist oder eine Zugang/Ausgang für Schall benötigt, so kann eine Durchführung 23 in Schritt S20 oder S50 ausgeführt werden, je nach Lage in der Aufnahme 22.

Als additives Herstellungsverfahren sind das Drucken mittels eines 3D-Druckers mit aufschmelzenden Polymeren, einem schichtweisen Abscheiden aus einem flüssigen Kunstharz mittels Fotopolymerisation oder auch schichtweise Sinter-oder Schmelztechniken mit einem Laser aus keramischem oder metallischem Pulver und andere Verfahren denkbar.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, wie in den abhängigen Ansprüche definiert.

## Patentansprüche

1. Verfahren zur Herstellung eines Elements (20) für ein Hörhilfegerät (100), wobei das Element (20) einen Körper (21) und eine Komponente (6) aufweist,
wobei das Verfahren die Schritte aufweist:
(S10) Vorbestimmen einer Relativposition der Komponente (6) an dem Element (20);
(S20) Vorbestimmen von Form und Lage einer Aufnahme (22) für die Komponente (6) in der vorbestimmten Relativposition als integraler Bestandteil des Körpers (21);
(S30) Herstellen eines Teils des Elements (20) mittels eines additiven Herstellungsverfahrens, wobei der Teil des Elements einen Teil des Körpers (21) und einen Teil der Aufnahme (22) aufweist, sodass die Komponente (6) in der vorbestimmten Relativposition in dem Teil der Aufnahme (22) eingelegt werden kann;
(S40) Einlegen der Komponente (6) in dem Teil der Aufnahme (22) ;
(S50) Fertigstellen des Körpers (21) und/oder der Aufnahme (22) mittels des additiven Herstellungsverfahrens.

2. Verfahren nach Anspruch 1,
wobei der Teil des Elements (20) bei Schritt (S40) des Positionierens der Komponente(6) in einer Vorrichtung zum Ausführen des additiven Herstellungsverfahrens verbleibt.

3. Verfahren nach Anspruch 1 oder 2,
wobei der Schritt (S40) des Positionierens weiterhin das Abtragen von Material in der Aufnahme (22) umfasst.

4. Verfahren nach einem der Ansprüche 1 bis 3,
wobei in Schritt (S30) und/oder Schritt (S50) eine Zuführung (23) in der Aufnahme (22) freigelassen wird.

5. Verfahren nach einem der Ansprüche 1 bis 4,
wobei das additive Herstellverfahren ein Verfahren für dreidimensionalen Druck ist.

6. Verfahren nach Anspruch 5,
wobei das additive Herstellverfahren einen Schritt aus Auftragen von geschmolzenem Material, Sintern oder Photopolymerisation aufweist.

## Claims

1. Method for manufacturing an element (20) for a hearing aid (100), wherein the element (20) has a body (21) and a component (6),
wherein the method has the steps of:
(S10) predetermining a relative position of the component (6) on the element (20);
(S20) predetermining shape and position of a holding means (22) for the component (6) in the predetermined relative position as an integral constituent part of the body (21);
(S30) manufacturing a part of the element (20) using an additive manufacturing method, wherein the part of the element includes a part of the body (21) and a part of the holding means (22) such that the component (6) can be placed in the predetermined relative position in the part of the holding means (22);
(S40) placing the component (6) in the part of the holding means (22);
(S50) finishing the body (21) and/or the holding means (22) using the additive manufacturing method.

2. Method according to Claim 1,
wherein the part of the element (20) in step (S40) of positioning the component (6) remains in an apparatus for carrying out the additive manufacturing method.

3. Method according to Claim 1 or 2,
wherein the step (S40) of positioning furthermore comprises ablation of material in the holding means (22).

4. Method according to one of Claims 1 to 3,
wherein in step (S30) and/or step (S50) an inlet (23) is left free in the holding means (22).

5. Method according to one of Claims 1 to 4,
wherein the additive manufacturing method is a method for three-dimensional printing.

6. Method according to Claim 5,
wherein the additive manufacturing method includes a step of applying molten material, sintering or photopolymerization.

## Revendications

1. Procédé de fabrication d'un élément (20) destiné à un appareil de correction auditive (100), dans lequel l'élément (20) présente un corps (21) et un composant (6), dans lequel le procédé comprend les étapes suivantes:
(S10) prédéterminer une position relative du composant (6) sur l'élément (20);
(S20) prédéterminer la forme et le positionnement d'un logement (22) pour le composant (6) dans la position relative prédéterminée comme constituant intégral du corps (21);
(S30) fabriquer une partie de l'élément (20) au moyen d'un procédé de fabrication additive, dans lequel la partie de l'élément présente une partie du corps (21) et une partie du logement (22), de telle manière que le composant (6) puisse être inséré dans la position relative prédéterminée dans la partie du logement (22);
(S40) insérer le composant (6) dans la partie du logement (22);
(S50) terminer le corps (21) et/ou le logement (22) au moyen du procédé de fabrication additive.

2. Procédé selon la revendication 1, dans lequel la partie de l'élément (20) reste dans un dispositif permettant l'exécution du procédé de fabrication additive lors de l'étape (S40) de mise en place du composant (6).

3. Procédé selon la revendication 1 ou 2, dans lequel l'étape (S40) de mise en place comprend en outre l'enlèvement de matière dans le logement (22).

4. Procédé selon l'une quelconque des revendications 1 à 3, dans lequel on laisse libre une arrivée (23) dans le logement (22) dans l'étape (S30) et/ou dans l'étape (S50).

5. Procédé selon l'une quelconque des revendications 1 à 4, dans lequel le procédé de fabrication additive est un procédé d'impression en trois dimensions.

6. Procédé selon la revendication 5, dans lequel le procédé de fabrication additive présente une étape d'apport de matière fondue, de frittage ou de photopolymérisation.
